# EUROPÄISCHE PATENTANMELDUNG

(11) **EP 2 579 602 A2**
(43) Veröffentlichungstag der Anmeldung: **10.04.2013**
(21) Anmeldenummer: 12195839.1
(22) Anmeldetag: 23.12.2005
(51) Int. Cl.: H04N 13/00

(54) **Verfahren und Vorrichtung zum Ermitteln eines Kalibrierparameters einer Stereokamera**

(30) Priorität: 23.12.2004 DE 102004062275
(62) Teilanmeldung aus: 05826376.5
(71) Anmelder: Hella KGaA Hueck & Co., 59552 Lippstadt (DE)
(72) Erfinder: Hoffmann, Ingo, 10437 Berlin (DE)
(74) Vertreter: Schaumburg, Thoenes, Thurn, Landskron, Eckert

(57) **Zusammenfassung**

Die Erfindung betrifft ein Verfahren und eine Vorrichtung zum Bestimmen einer Objekteigenschaft eines Objekts mit Hilfe von Bildern, die mit Hilfe einer Kamera (16, 18) erfasst werden. Ferner betrifft die Erfindung ein Verfahren zum Ermitteln eines Kalibrierparameters für eine Stereokamera (12). Zum Bestimmen einer Objekteigenschaft eines Objekts wird das Objekt in einem ersten mit Hilfe der Kamera (16, 18) erfassten Bild bestimmt. Ferner wird die Helligkeit eines bestimmten Objekts bestimmt. Jeweils nach einem voreingestellten Zeitintervall wird ein weiteres Bild mit Hilfe der Kamera (16, 18) erfasst. Das Objekt wird in jedem der weiteren Bilder bestimmt und jeweils die Helligkeit des bestimmten Objekts jedes Bildes ermittelt. Abhängig vom Verlauf der Helligkeit wird dem Objekt eine Objekteigenschaft zugewiesen.

## Beschreibung

Die Erfindung betrifft ein Verfahren und eine Vorrichtung zum Ermitteln eines Kalibrierparameters einer Stereokamera. Mit Hilfe der Stereokamera werden jeweils mindestens zwei Mal in einem zeitlichen Abstand nacheinander Objektabbildungen eines Objekts erfasst und jeweils die Entfernung zwischen Stereokamera und Objekt bestimmt.

Die Erfindung betrifft ferner ein Verfahren und eine Vorrichtung zum Bestimmen einer Objekteigenschaft eines Objekts mit Hilfe von Bildern, die mit Hilfe einer Kamera erfasst worden sind sowie eine Computersoftware und einen Datenträger mit dieser Computersoftware.

Bekannte Stereokamerasysteme haben zwei Einzelbildkameras, die vorzugsweise jeweils einen CCD-Sensor und eine Objektivoptik mit einer festen Brennweite oder alternativ einen CMOS-Bildsensor und eine solche Objektivoptik umfassen. Die Einzelbildkameras nehmen vorzugsweise gleichzeitig je ein Bild auf. Diese Bilder werden vorzugsweise als Bildpaar bezeichnet. Mit Hilfe der aufgenommenen Bilder kann dann eine direkte Entfernungsmessung von in beiden Bildern sichtbaren Objekten durchgeführt werden. Zum Ermitteln der Entfernung ist es von entscheidender Bedeutung, neben den Kameraparametern auch die Ausrichtung der optischen Achsen der Einzelbildkameras zueinander genau zu kennen. Es kann beispielsweise ein stabiler Aufbau gewählt werden, durch den die beiden Kameras ihre Lage zueinander bei den vorgesehenen Betriebsbedingungen nur unwesentlich ändern. Dadurch wird für ein kalibriertes System eine Langzeitstabilität gewährleistet. Neben dem relativ aufwendigen Aufbau, der auch erheblichen Platz in Anspruch nimmt, kann bei der Entfernungsmessung infolge der trotz des stabilen Aufbaus möglichen Positionsänderungen der Kameras zueinander eine erhebliche Messungenauigkeit beim Messergebnis auftreten. Dadurch muss eine Reichweitenbeschränkung der Entfernungsmessung erfolgen, um Messergebnisse in einem sinnvollen Toleranzbereich zu erhalten. Nur durch einen stabilen Aufbau und der Beschränkung der Messgenauigkeit und der Reichweite können mit Hilfe eines solchen Stereokamerasystems über einen längeren Zeitraum Entfernungsmessungen sinnvoll durchgeführt werden, ohne dass zwischenzeitlich aufwendige Kalibrierarbeiten durchgeführt werden müssen.

Ist jedoch eine höhere Genauigkeit und/oder das Bestimmen größerer Entfernungen erforderlich, muss eine Neujustierung des Stereokamerasystems oder ein Nachkalibrieren erfolgen. Es ist möglich, eine höhere Messgenauigkeit durch eine perfekte mechanische Ausrichtung der optischen Achsen des Kamerasystems zu erreichen oder die tatsächlichen Lagen der optischen Achsen beispielsweise durch das Bestimmen von Fehlerwinkeln zu ermitteln und diese tatsächlichen Lagen bei der Auswertung der erfassten Bilder als Kalibrierparameter zu berücksichtigen. Diese Lagen können insbesondere im Auswertealgorithmus zum Ermitteln der Entfernung eines Objekts berücksichtigt werden. Ein Kriterium für die Praxistauglichkeit eines Stereokamerasystems ist, dass keine Serviceeingriffe während des normalen Betriebs zur Justage und Kalibrierung erforderlich sind und Störungen möglichst automatisch erkannt und beseitigt werden.

Die Kalibrierung bekannter Stereokamerasysteme, die den beschriebenen stabilen mechanischen Aufbau haben, erfolgt mit Hilfe spezieller Bildvorlagen, von denen je eine Abbildung mit Hilfe der Einzelbildkameras erzeugt wird. Um eine hohe Messgenauigkeit des Stereokamerasystems bei der Entfernungsmessung zu gewährleisten, muss diese Kalibrierung in von den Umgebungsbedingungen abhängigen Zeitabständen wiederholt werden. Bei der Kalibrierung werden in den von den Einzelbildkameras des Stereokamerasystems erfassten Bildern markante korrespondierende zweidimensionale Objektabbildungen vermessen. Üblicherweise wird aus mindestens neun solchen korrespondierenden Objektabbildungen in einem zuverlässigen Verfahren eine so genannte Fundamentalmatrix bestimmt. Diese Fundamentalmatrix enthält sowohl eine Rotationsmatrix der beiden Kameras zueinander und ihren Entfernungsvektor. Jedoch ist bei diesem Verfahren die Positionsbestimmung der Bildinhalte mit Hilfe der Kameras nur mit einer von der Kameraauflösung abhängigen Genauigkeit möglich. Somit ist eine hochgenaue Kalibrierung des Kamerasystems mit Hilfe eines solchen bekannten Verfahrens nicht möglich.

Besteht ferner eine Relativbewegung zwischen dem Stereokamerasystem und einem beobachteten Objekt, kann ein weiteres bekanntes Verfahren zur Selbstkalibrierung des Stereokamerasystems eingesetzt werden. Mit Hilfe einer durch eine der Kameras des Stereokamerasystems erfassten Bildfolge kann das Verhältnis der über mehrere Bilder verfolgten Bewegungen des Objekts zu seiner Gesamtentfernung abgeleitet, d.h. berechnet, werden. Durch die Vermessung desselben Objekts in den Bildpaaren der beiden Kameras des Stereokamerasystems wird ein fehlerbehafteter Entfernungsverlauf ermittelt. Anschließend werden die beiden Messwerte verglichen, wodurch die Fehlerwinkel der Kalibrierung geschätzt werden können. Auch bei diesem bekannten Verfahren hängt die Genauigkeit, mit der die Fehlerwinkel bestimmt werden können, von der Genauigkeit der Positionsbestimmung der Objekte mit Hilfe der durch die Kameras erfassten Objektabbildungen ab.

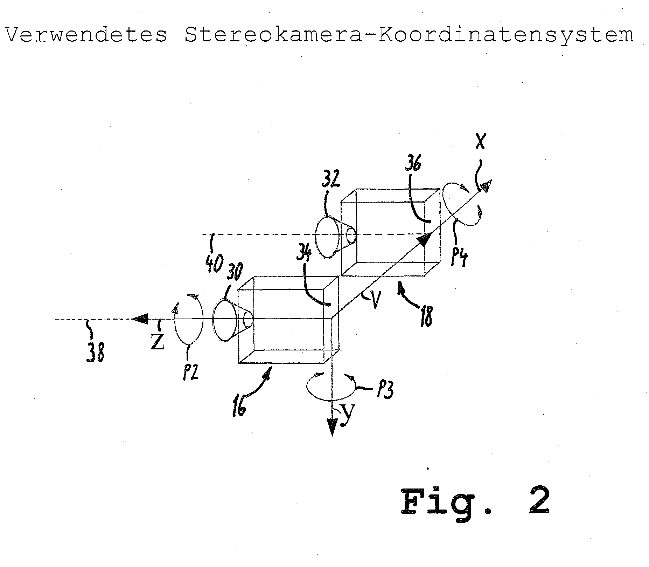

Die möglichen Fehlerwinkel eines Stereokamerasystems mit zwei Einzelbildkameras werden in der nachfolgenden Figurenbeschreibung in Zusammenhang mit den Figuren 2 bis 5 noch näher erläutert. Zur Vereinfachung wird zur Beschreibung der Lage und Position der Einzelbildkameras in dieser Patentanmeldung ein Kamerakoordinatensystem gemäß Figur 2 definiert, das eine beliebige Lage zu anderen Koordinatensystemen haben kann. Jedoch lässt sich jede Lage und jede Position jeder Einzelbildkamera auch in Bezug auf ein anderes Koordinatensystem, beispielsweise auf das Weltkoordinatensystem oder ein definiertes Bildkoordinatensystem, angeben. Eine Position im Kamerakoordinatensystem kann einfach in eine Position im Weltkoordinatensystem bzw. in eine Position im Bildkoordinatensystem umgerechnet werden, wenn die Lagen der beiden Koordinatensysteme zueinander bekannt sind.

In den nachfolgenden Ausführungsbeispielen ist der Koordinatenursprung des Kamerakoordinatensystems im Schnittpunkt der optischen Achse der ersten Einzelbildkamera mit der Bildebene dieser ersten Einzelbildkamera definiert. Die optische Achse der ersten Einzelbildkamera wird als Z-Achse des Kamerakoordinatensystems definiert. Der Vektor vom Koordinatenursprung zum Schnittpunkt der optischen Achse der zweiten Einzelbildkamera mit der Bildebene dieser zweiten Einzelbildkamera und die Z-Achse spannen eine Ebene auf, in der die orthogonal zur Z-Achse angeordnete X-Achse verläuft. Die Y-Achse verläuft orthogonal zur Z-Achse und orthogonal zur X-Achse. Der Abstandsvektor zwischen den Schnittpunkten der optischen Achsen der jeweiligen Kamera mit deren Bildebenen wird als Basisbreite bezeichnet, wobei die Einzelbildkameras um einen Wert V=(Basisbreite, 0, 0) versetzt angeordnet sind, wenn die Schnittpunkte der optischen Achsen beider Kameras mit deren Bildebenen auf der X-Achse liegen.

Ein solches Kamerakoordinatensystem hat den Vorteil, dass unabhängig von der Lage der Einzelbildkameras zur Umgebung der Versatz der beiden Einzelbildkameras um die Basisbreite immer etwa in Richtung der X-Achse vorhanden ist. Werden die Einzelbildkameras im Weltkoordinatensystem direkt übereinander angeordnet, verläuft die X-Achse des Kamerakoordinatensystem dann im Weltkoordinatensystem im Wesentlichen senkrecht und die Y-Achse und die Z-Achse des Kamerakoordinatensystems verlaufen im Weltkoordinatensystem Wesentlichen waagerecht. Bei einer exakt horizontalen Ausrichtung der X-Achse des Kamerakoordinatensystems im Weltkoordinatensystem verlaufen die Y-Achse des Kamerakoordinatensystems vertikal und die Z-Achse ebenfalls horizontal. Ein solches Kamerakoordinatensystem hat insbesondere bei Installation des Stereokamerasystems in einem sich im Raum des Weltkoordinatensystems bewegten Fahrzeug den Vorteil, dass die Lagen der Koordinatensysteme zueinander nicht laufend bestimmt und bei der Auswertung und Analyse der erfassten Bilder, beispielsweise zur Bestimmung der Entfernung eines erfassten Objekts, nicht unmittelbar berücksichtigt werden müssen.

Gemäß der Definition von Winkeln in dieser Patentanmeldung wird der Winkel, um den eine Einzelbildkamera um die X-Achse gedreht ist, wird als Nickwinkel bezeichnet. Der Winkel, um den eine Einzelbildkamera um die Z-Achse gedreht ist, wird als Wankwinkel oder Rollwinkel bezeichnet. Der Winkel, um den eine Einzelbildkamera um die Y-Achse gedreht ist, wird als Gierwinkel bezeichnet.

Die Begriffe Wankwinkel, Nickwinkel und Gierwinkel stimmen im Wesentlichen mit den ebenso benannten Winkeln bei der Ausrichtung eines Flugzeugs überein.

Der Nickwinkel und der Wankwinkel lassen sich durch eine Analyse eines Bildpaars bestimmen. Dabei werden mindestens zwei Bildkorrespondenzen, d.h. zwei markante Übereinstimmungen, in den mit Hilfe der beiden Kameras gleichzeitig aufgenommenen Bildern ermittelt. Anhand der Lage dieser Bildkorrespondenzen in den mit Hilfe der Kameras aufgenommenen Bildern werden die Abweichungen von einem voreingestellten Nickwinkel und einem voreingestellten Wankwinkel ermittelt, wobei die voreingestellten Winkelwerte zur Bildkorrektur und/oder zur Bildanalyse mit Hilfe der ermittelten Abweichung korrigiert werden. Die Abweichungen geben somit den Nickwinkelfehler und den Wankwinkelfehler an. Derzeit ist jedoch kein Verfahren und keine Vorrichtung bekannt, mit dem bzw. mit der ein Kalibrierparameter einer Stereokamera zur Entfernungsmessung, insbesondere ein Gierwinkelfehler oder ein Gierwinkel, auf einfache Art und Weise bestimmt werden kann.

Aufgabe der Erfindung ist es, ein Verfahren und eine Vorrichtung anzugeben, bei der ein Kalibrierparameter für eine Stereokamera auf einfache Art und Weise sicher bestimmt werden kann. Ferner ist ein Verfahren und eine Vorrichtung anzugeben, durch die mindestens eine Objekteigenschaft eines Objekts mit Hilfe von Bildern auf einfache Art und Weise bestimmt werden kann.

Gemäß einem ersten Aspekt der Erfindung ist zur Lösung dieser Aufgabe ein mit Hilfe des Patentanspruch 1 angegebenes Verfahren zum Bestimmen einer Objekteigenschaft eines Objekts mit Hilfe von durch eine Kamera erfassten Bildern angegeben. Vorteilhafte Weiterbildungen der Erfindung sind in den abhängigen Patentansprüchen angegeben.

Durch ein solches erfindungsgemäßes Verfahren zum Bestimmen einer Objekteigenschaft wird der Verlauf der Helligkeit einer mit Hilfe der Kamera erfassten Objektabbildung analysiert. Vorzugsweise wird mindestens eine Eigenschaft des Helligkeitsverlaufs analysiert und Ausgewertet.

Mit Hilfe des erfindungsgemäßen Verfahrens kann beispielsweise ermittelt werden, ob das Objekt eine mit einer Wechselspannung betriebene Lichtquelle ist, die dann als ortsfest angenommen werden kann. Dadurch kann die tatsächliche Relativgeschwindigkeit zwischen der Stereokamera und dem Objekt durch ermitteln der absoluten Geschwindigkeit der Stereokamera, beispielsweise im Weltkoordinatensystem, ermittelt werden.

Ein zweiter Aspekt der Erfindung betrifft eine Vorrichtung zum Bestimmen einer Objekteigenschaft eines Objekts mit Hilfe von Bildern, die mit Hilfe einer Kamera erfasst worden sind. Die Vorrichtung umfasst eine Kamera, die zumindest in einem voreingestellten Zeitintervall Bilder von mindestens einem Objekt erfasst. Ferner umfasst die Vorrichtung ein Mittel, das mindestens ein Objekt in einem ersten mit Hilfe der Kamera erfassten Bild bestimmt und das die Helligkeit des bestimmten Objekts ermittelt. Ferner bestimmt das Mittel das Objekt in jedem der weiteren mit Hilfe der Kamera im voreingestellten Zeitintervall erfassten Bilder und ermittelt jeweils die Helligkeit des bestimmten Objekts. Ferner weist das Mittel dem Objekt abhängig vom Verlauf der Helligkeit eine Objekteigenschaft zu.

Diese erfindungsgemäße Vorrichtung ermittelt auf einfache Art und Weise mindestens eine Objekteigenschaft des Objekts. Diese Objekteigenschaft kann dann einfach für die Weiterverarbeitung der mit Hilfe der Kamera aufgenommenen Bilddaten genutzt werden. Beispielsweise kann die Objekteigenschaft zum Durchführen eines Kalibriervorgangs eines Stereokamerasystems genutzt werden, zu dem die Kamera der Vorrichtung gehört.

Ein dritter Aspekt der Erfindung betrifft ein Verfahren zum Ermitteln eines Kalibrierparameters für eine Stereokamera, bei dem die Relativbewegung der Stereokamera und eines weiteren Objekts zueinander analysiert wird. Mit Hilfe von mit der Stereokamera mindestens zwei Mal in einem zeitlichen Abstand nacheinander erfassten Objektabbildungen des Objekts wird jeweils die Entfernung zwischen der Stereokamera und dem Objekt bestimmt. Mit Hilfe der bestimmten Entfernungen wird eine scheinbare Entfernungsänderung zwischen der Stereokamera und dem Objekt bestimmt. Die tatsächliche Entfernungsänderung zwischen der Stereokamera und dem Objekt wird mit Hilfe eines von dem Entfernungsmesssystems der Stereokamera unabhängigen Systems ermittelt. Beispielsweise wird die tatsächliche Entfernungsänderung von diesem unabhängigen System als Information bereitgestellt. Abhängig von der Abweichung der scheinbaren Entfernungsänderung und der tatsächlichen Entfernungsänderung wird mindestens ein Kalibrierparameter für das Bestimmen von weiteren Entfernungen zu dem Objekt und/oder zu weiteren Objekten mit Hilfe von durch die Stereokamera erfassten Objektabbildungen ermittelt.

Mit Hilfe eines solchen erfindungsgemäßen Verfahrens kann ein Kalibrierparameter für eine korrekte Entfernungsmessung auf sehr einfache Art und Weise bestimmt werden, wodurch die Stereokamera bei bekannten Nick- und Wankwinkeln automatisch sehr genau kalibriert werden kann. Dadurch kann auch eine on-the-fly-Kalibrierung des Stereokamerasystems beispielsweise während der Fahrt eines Fahrzeugs, in dem das Stereokamerasystem integriert ist, erfolgen.

Ein vierter Aspekt der Erfindung betrifft ein Verfahren zum Ermitteln eines Kalibrierparameters für eine Stereokamera, bei dem eine Relativbewegung der Stereokamera zu einem weiteren Objekt analysiert wird. Mit Hilfe von durch die Stereokamera mindestens zwei Mal in einem zeitlichen Abstand nacheinander erfassten Objektabbildungen des Objekts wird jeweils die Entfernung zwischen der Stereokamera und dem Objekt bestimmt. Mit Hilfe der bestimmten Entfernungen wird eine scheinbare Geschwindigkeit zwischen der Stereokamera und dem Objekt bestimmt. Die tatsächliche Geschwindigkeit zwischen der Stereokamera und dem Objekt wird mit Hilfe eines von dem Entfernungsmesssystems der Stereokamera unabhängigen Systems ermittelt. Abhängig von der Abweichung der scheinbaren Geschwindigkeit und der tatsächlichen Geschwindigkeit wird mindestens ein Kalibrierparameter für das Bestimmen weiterer Entfernungen zwischen der Stereokamera und dem Objekt und/oder zwischen der Stereokamera und weiteren Objekten mit Hilfe von durch die Stereokamera erfassten Objektabbildungen ermittelt.

Durch ein solches erfindungsgemäßes Verfahren kann ein Kalibrierparameter für eine korrekte und genaue Entfernungsmessung auf sehr einfache Art und Weise bestimmt werden. Die mit Hilfe der Stereokamera erfassten Objektabbildungen können so abhängig vom ermittelten Kalibrierparameter analysiert und ausgewertet werden. Bei bekannten Nick- und Wankwinkeln kann durch das Ermitteln des Kalibrierparameters ein Stereokamerasystem automatisch sehr genau kalibriert werden.

Ein fünfter Aspekt der Erfindung betrifft eine Vorrichtung zum Ermitteln eines Kalibrierparameters für eine Stereokamera, bei der eine Steuereinheit die Relativbewegung der Stereokamera und eines weiteren Objekts analysiert. Die Stereokamera erfasst mindestens zwei Mal in einem zeitlichen Abstand nacheinander Objektabbildungen des Objekts. Die Steuereinheit bestimmt mit Hilfe der erfassten Objektabbildungen jeweils die Entfernung zwischen der Stereokamera und dem Objekt. Mit Hilfe der bestimmten Entfernungen bestimmt die Steuereinheit eine scheinbare Entfernungsänderung zwischen der Stereokamera und dem Objekt. Die Steuereinheit ermittelt mit Hilfe eines von dem Entfernungsmesssystems der Stereokamera unabhängigen Systems die tatsächliche Entfernungsänderung zwischen der Stereokamera und dem Objekt. Abhängig von der Abweichung der scheinbaren Entfernungsänderung und der tatsächlichen Entfernungsänderung ermittelt die Steuereinheit mindestens einen Kalibrierparameter für das Bestimmen von weiteren Entfernungen zwischen der Stereokamera und dem Objekt und/oder zwischen der Stereokamera und weiteren Objekten mit Hilfe von durch die Stereokamera erfassten Objektabbildungen.

Durch eine solche erfindungsgemäße Vorrichtung kann auf einfache Art und Weise ein Kalibrierparameter ermittelt werden, mit dem dann korrekte Entfernungen von Objekten zur Stereokamera ermittelt werden können. Durch das Ermitteln des Kalibrierparameters kann ein Stereokamerasystem mit der Stereokamera auf einfache Art und Weise automatisch sehr genau kalibriert werden. Vorzugsweise werden der Nickwinkel und der Wankwinkel der Einzelbildkameras der Stereokamera vor dem Ermitteln des Kalibrierparameters bestimmt.

Ein sechster Aspekt der Erfindung betrifft eine Vorrichtung zum Ermitteln eines Kalibrierparameters für eine Stereokamera, bei der eine Steuereinheit eine Relativbewegung der Stereokamera zu einem weiteren Objekt analysiert. Die Stereokamera erfasst mindestens zwei Mal in einem zeitlichen Abstand nacheinander Objektabbildungen des Objekts. Die Steuereinheit bestimmt mit Hilfe der erfassten Objektabbildung jeweils die Entfernung zwischen der Stereokamera und dem Objekt. Mit Hilfe der bestimmten Entfernungen bestimmt die Steuereinheit eine scheinbare Geschwindigkeit zwischen der Stereokamera und dem Objekt. Die Steuereinheit bestimmt die tatsächliche Geschwindigkeit zwischen der Stereokamera und dem Objekt mit Hilfe eines von dem Entfernungsmesssystems der Stereokamera unabhängigen Systems. Abhängig von der Abweichung der scheinbaren Geschwindigkeit und der tatsächlichen Geschwindigkeit ermittelt die Steuereinheit mindestens einen Kalibrierparameter für das Bestimmen von weiteren Entfernungen zwischen der Stereokamera 12 und dem Objekt und/oder zwischen der Stereokamera 12 und weiteren Objekten mit Hilfe von durch die Stereokamera erfassten Objektabbildungen.

Durch eine solche erfindungsgemäße Vorrichtung kann der Kalibrierparameter auf sehr einfache Art und Weise ermittelt werden, durch den dann Entfernungen zwischen der Stereokamera und Objekten genau bestimmt werden können. Insbesondere bei bekannten Nick- und Wankwinkeln der Einzelbildkameras der Stereokamera zueinander kann das gesamte Stereokamerasystem automatisch sehr genau kalibriert werden.

Ein siebter Aspekt der Erfindung betrifft ein Verfahren zum Ermitteln eines Kalibrierparameters für eine Stereokamera, bei dem die tatsächliche Position eines Objekts zu einem Zeitpunkt bestimmt wird. Die scheinbare Entfernung zwischen Stereokamera und Objekt wird zu diesem Zeitpunkt mit Hilfe von durch die Stereokamera zu diesem Zeitpunkt erfassten Objektabbildungen des Objekts bestimmt. Die tatsächliche Position der Stereokamera zu diesem Zeitpunkt wird bestimmt. Ferner wird die tatsächliche Entfernung zwischen der Stereokamera und dem Objekt zu diesem Zeitpunkt mit Hilfe der bestimmten tatsächlichen Position bestimmt. Mindestens ein Kalibrierparameter wird abhängig von der Abweichung der scheinbaren Entfernung von der tatsächlichen Entfernung ermittelt, wobei der Kalibrierparameter zum Bestimmen von weiteren Entfernungen zwischen der Stereokamera und dem Objekt und/oder zwischen der Stereokamera und weiteren Objekten mit Hilfe von durch die Stereokamera erfassten Objektabbildungen dient.

Mit Hilfe eines solchen erfindungsgemäßen Verfahrens kann ein Kalibrierparameter zum korrekten Ermitteln von Entfernungen auf einfache Art und Weise automatisch ermittelt werden, wodurch eine so genannte on-the-fly-Kalibrierung möglich ist.

Ein achter Aspekt der Erfindung betrifft eine Vorrichtung zum Ermitteln eines Kalibrierparameters für eine Stereokamera, bei der eine erste Auswerteeinheit die tatsächliche Position eines Objekts zu einem Zeitpunkt bestimmt. Eine zweite Auswerteeinheit bestimmt die scheinbare Entfernung zwischen der Stereokamera und dem Objekt zu diesem Zeitpunkt mit Hilfe von durch die Stereokamera zu diesem Zeitpunkt erfassten Objektabbildungen des Objekts. Die zweite Auswerteeinheit ermittelt die tatsächliche Position der Stereokamera zu diesem Zeitpunkt. Die zweite Auswerteeinheit bestimmt die tatsächliche Entfernung zwischen der Stereokamera und dem Objekt zu diesem Zeitpunkt mit Hilfe der bestimmten tatsächlichen Positionen. Ferner ermittelt die zweite Auswerteeinheit mindestens einen Kalibrierparameter abhängig von der Abweichung der scheinbaren Entfernung von der tatsächlichen Entfernung. Der Kalibrierparameter dient zum Bestimmen von weiteren Entfernungen zwischen der Stereokamera und dem Objekt und/oder zwischen der Stereokamera und weiteren Objekten mit Hilfe von durch die Stereokamera erfassten Objektabbildungen.

Durch eine solche erfindungsgemäße Vorrichtung kann ein Kalibrierparameter zum Kalibrieren eines Stereokamerasystems auf einfache Art und Weise ermittelt werden, wodurch ein so kalibriertes Kamerasystem die Entfernung zwischen der Stereokamera und einem Objekt exakt bestimmen kann. Eine solche Vorrichtung ist insbesondere dazu geeignet, die Stereokamera on-the-fly zu kalibrieren.

Weitere Aspekte der Erfindung betreffen ein Computerprogramm zum Steuern der jeweiligen Verfahrensabläufe des ersten, zweiten, dritten und/oder des siebten Aspekts der Erfindung sowie ein entsprechender Datenträger zum Speichern des Quellcodes und/oder des kompilierten Quellcodes des Computerprogramms.

Zum besseren Verständnis der vorliegenden Erfindung wird im Folgenden auf die in den Zeichnungen dargestellten bevorzugten Ausführungsbeispiele Bezug genommen, die an Hand spezifischer Terminologie beschrieben sind. Es sei jedoch darauf hingewiesen, dass der Schutzumfang der Erfindung dadurch nicht eingeschränkt werden soll, da derartige Veränderungen und weitere Modifizierungen an den gezeigten Vorrichtungen und den Verfahren sowie derartige weitere Anwendungen der Erfindung, wie sie darin aufgezeigt sind, als übliches derzeitiges oder künftiges Fachwissen eines zuständigen Fachmanns angesehen werden. Die Figuren zeigen Ausführungsbeispiele der Erfindung, nämlich:
- Figur 1: einen Personenkraftwagen mit einem erfindungsgemäßen Stereokamerasystem;
- Figur 2: eine schematische dreidimensionale Darstellung der Einzelbildkameras des erfindungsgemäßen Stereokamerasystems,
- Figur 3: eine Vorderansicht Einzelbildkameras nach Figur 2, bei der die Einzelbildkameras eine Wankwinkeldifferenz α zueinander haben;
- Figur 4: eine Seitenansicht der Einzelbildkameras nach Figur 2, bei der die Einzelbildkameras eine Nickwinkeldifferenz β haben;
- Figur 5: eine Draufsicht der Einzelbildkameras nach Figur 2, bei der die Einzelbildkameras eine Gierwinkeldifferenz γ haben;
- Figur 6: eine mit Hilfe des Stereokamerasystems nach Figur 1 ermittelte Annäherung eines Objekts an das Stereokamerasystem, mit Hilfe der Entfernungen zwischen Stereokamerasystem und dem Objekt zu den Zeitpunkten T0 bis T10 angegeben ist, wobei der tatsächliche Gierwinkel γ kleiner ist als der voreingestellte Gierwinkel;
- Figur 7: die Annäherung des Objekts an das Stereokamerasystem zu den Zeitpunkten T0 bis T10, wobei im Unterschied zu Figur 6 der tatsächliche Gierwinkel mit dem voreingestellten Gierwinkel übereinstimmt;
- Figur 8: die Annäherung des Objekts an das Stereokamerasystem zu den Zeitpunkten T0 bis T10, wobei der voreingestellte Gierwinkel γ größer als der tatsächliche Gierwinkel ist;
- Figur 9: ein Diagramm mit dem Verhältnis von scheinbarer Entfernung und scheinbarer Annäherungsgeschwindigkeit der ermittelten Annäherung des Objekts zu den Zeitpunkten T0 bis T10 nach den Figuren 6 bis 8;
- Figur 10: ein Ablaufplan zum Ermitteln von Korrekturwerten für Nickwinkel und Wankwinkel;
- Figur 11: ein Ablaufplan zum Bestimmen des tatsächlichen Gierwinkels γ des Stereokamerasystems gemäß einer ersten Ausführungsform;
- Figur 12: ein Ablaufplan zum Ermitteln des tatsächlichen Gierwinkels γ gemäß einer zweiten Ausführungsform;
- Figur 13: ein Diagramm mit Graphen, die die Überlagerung der Helligkeitsschwankungen eines mit einer 50 Hz Wechselspannung betriebenen Leuchtmittels mit einer Abtastfrequenz von 22 Hz zeigen, wobei eine 100 Hz Helligkeitsschwankung des Leuchtmittels und der durch die Abtastung erzeugte Helligkeitsverlauf dargestellt sind;
- Figur 14: ein Diagramm mit dem durch die Abtastung nach Figur 13 erzeugten Helligkeitsverlauf;
- Figur 15: ein Diagramm eines durch eine Abtastung des Helligkeitsverlaufs des Leuchtmittels mit einer ungünstigen Abtastfrequenz resultierenden Helligkeitsverlaufs des abgetasteten Signals;
- Figur 16: ein Diagramm mit Graphen, die die Überlagerung des Helligkeitsverlaufs eines mit 60 Hz betriebenen Leuchtmittels mit einer Abtastfrequenz von 22 Hz zeigen, wobei der durch die Abtastung erzeugte Helligkeitsverlauf des abgetasteten Signals dargestellt ist;
- Figur 17: ein Diagramm, in dem der abgetastete Helligkeitsverlauf nach Figur 16 separat dargestellt ist, und
- Figur 18: ein Diagramm mit einem Helligkeitsverlauf, der durch die Abtastung der Helligkeitsschwankungen des mit 60 Hz Wechselspannung betriebenen Leuchtmittels mit einer anderen ungünstigeren Abtastfrequenz.

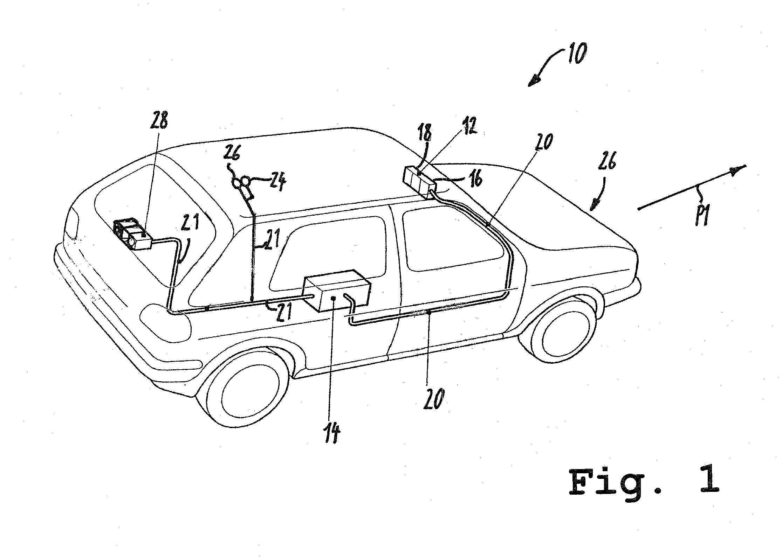

In Figur 1 ist ein Personenkraftwagen 10 dargestellt, in dem ein Stereokamerasystem mit einer Stereokamera 12 und einer Steuer- und Auswerteeinheit 14 vorgesehen ist. Die Stereokamera 12 umfasst zwei Einzelbildkameras 16, 18, die in einem Abstand im Wesentlichen quer zur Fahrtrichtung P1 nebeneinander angeordnet sind. Die optischen Achsen der Kameras 16, 18 sind derart ausgerichtet, dass mit Hilfe der Kameras 16, 18 ein Bereich vor dem Personenkraftwagen 10 erfasst wird. Die optischen Achsen der Kameras 16, 18 haben vorzugsweise einen Gierwinkel zueinander.

Bei anderen Ausführungsformen können die beiden optischen Achsen der Kameras 16, 18 auch exakt parallel ausgerichtet sein. Die Kameras 16, 18 nehmen jeweils gleichzeitig ein Einzelbild von etwa der gleichen Umgebung vor dem Personenkraftwagen 10 auf, wobei die Kameras 16, 18 vorzugsweise einen optisch-elektrischen Wandler, insbesondere ein CCD oder ein CMOS-Bildsensor, und eine Objektivoptik mit einer festen Brennweite haben. Das Stereokamerasystem 12 ist im Bereich des inneren Rückspiegels des Personenkraftwagens 10 angeordnet, wobei die Kameras 16, 18 freie Sicht durch die Frontscheibe des Personenkraftwagens 10 hindurch haben, um den abzubildenden Umgebungsbereich vor dem Personenkraftwagen 10 erfassen zu können.

Die Stereokamera 12 ist vorzugsweise über einen ersten Datenbus 20 mit der Steuer- und Auswerteeinheit 14 verbunden. Bilddaten der mit Hilfe der Kameras 16, 18 aufgenommenen Bilder werden über den Datenbus 20 zur Steuereinheit 14 übertragen und von dieser ausgewertet. Dieser Datenbus 20 ist vorzugsweise ein Fire-Wire-Datenbus nach IEEE-Norm oder ein LAN. Es ist ein zweiter Datenbus 21 vorgesehen, der vorzugsweise ein fahrzeuginterner Datenbus ist und der mit weiteren Steuereinheiten und Sensoren des Personenkraftwagens 10 verbunden ist. Dieser Datenbus 21 ist beispielsweise ein CAN-Bus. Der Personenkraftwagen 10 hat ferner eine Empfangs- und Auswerteeinheit 22 für ein Navigationssystem, vorzugsweise ein satellitengestütztes Navigationssystem. Ein solches satellitengestütztes Navigationssystem ist beispielsweise das GPS (Global Positioning System).

Der Personenkraftwagen 10 hat ferner eine Sende- und Empfangseinheit 24 für ein drahtloses Kommunikationsnetz, vorzugsweise für ein drahtloses Netz zum Übertragen von Daten. Ein solches Kommunikationsnetz kann beispielsweise ein GSM-Netz (Global Standard For Mobile Communication), ein Adhoc-Wireless-LAN, Bluetooth- oder anderes Kommunikationsnetz sein. Über dieses Kommunikationsnetz kann über die Sende- und Empfangseinheit 24 die eigene Position des Personenkraftwagens 10 und Geschwindigkeit zu anderen Fahrzeugen, insbesondere zu anderen Personenkraftwagen, übertragen werden und die Position und/oder Geschwindigkeit eines anderen Fahrzeugs, vorzugsweise eines Fahrzeugs, das sich im Erfassungsbereich der Einzelbildkameras 16 und 18 befindet, empfangen werden. Insbesondere enthalten die übertragenen Informationen, d.h. die gesendeten und die empfangenen Informationen, einen Zeitstempel, vorzugsweise mit der Zeit einer Atomuhr. Die Zeit zum Erzeugen des Zeitstempels wird vorzugsweise mit Hilfe der im Personenkraftwagen 10 vorgesehenen Sende- und Empfangseinheit 22 des satellitengestützten Navigationssystems und einer im anderen über das drahtlose Kommunikationsnetz mit dem Personenkraftwagen 10 kommunizierende Fahrzeug vorgesehenen Sende- und Empfangseinheit 22 des satellitengestützten Navigationssystems ermittelt.

Die Empfangs- und Auswerteeinheit 22 des satellitengestützten Navigationssystems und die Sende- und Empfangseinheit 24 sind über den internen Datenbus 21 ebenfalls mit der Steuer- und Auswerteeinheit 14 des Stereokamerasystems verbunden. Somit kann über das Kommunikationsnetz beispielsweise die Position eines entgegenkommenden Fahrzeugs exakt ermittelt werden. Aufgrund der Kenntnis der eigenen Position im Raum kann somit überprüft werden, ob eine mit Hilfe des Stereokamerasystems durchgeführte Entfernungsmessung zu der gleichen Entfernung zwischen den Positionen des Personenkraftwagens 10 und dem entgegenkommenden Fahrzeug führt. Bei Abweichungen kann ein Kalibrierparameter, beispielsweise ein Korrekturwert, ermittelt werden. Insbesondere kann durch dieses Verfahren der Gierwinkel ermittelt und gegebenenfalls korrigiert werden, der für die Entfernungsmessung von entscheidender Bedeutung ist.

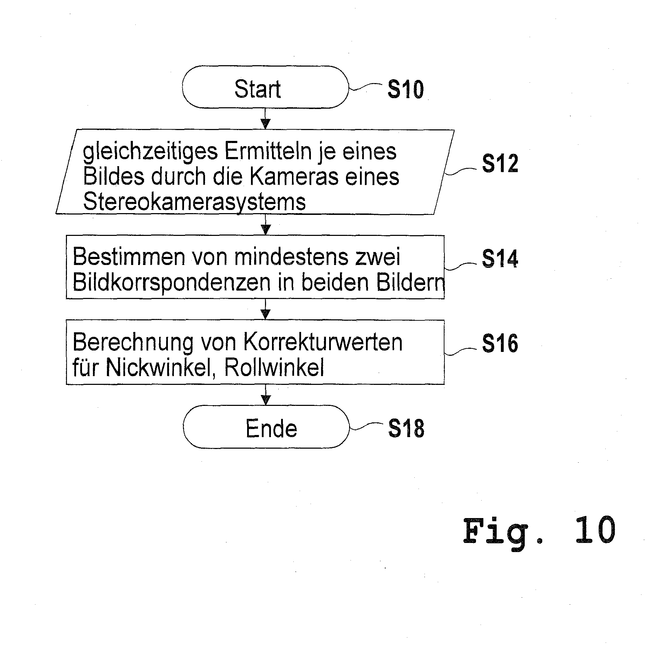

Wie nachfolgend im Zusammenhang mit Figur 10 erläutert wird, sind insbesondere der Wankwinkel und der Nickwinkel der jeweiligen Einzelbildkamera 16, 18 mit Hilfe von mehreren mit Hilfe der Einzelbildkameras 16, 18 aufgenommenen Einzelbildern ermittelbar. Auch können ortsfeste Objekte, wie z.B. Ampelanlagen, Verkehrsschilder oder Gebäude ihre Position über das Kommunikationsnetz zur Sende- und Empfangseinheit 24 des Personenkraftwagens 10 übertragen. Dann kann beispielsweise der Gierwinkel zwischen den optischen Achsen der Einzelbildkameras 16, 18 mit Hilfe einer Objektverfolgung des ortsfesten Objekts über mindestens zwei Bilder, die in einem voreingestellten Zeitabstand mit Hilfe der Einzelbildkameras 16, 18 jeweils gleichzeitig erfasst worden sind, ermittelt und somit ein voreingestellter Gierwinkel überprüft werden.

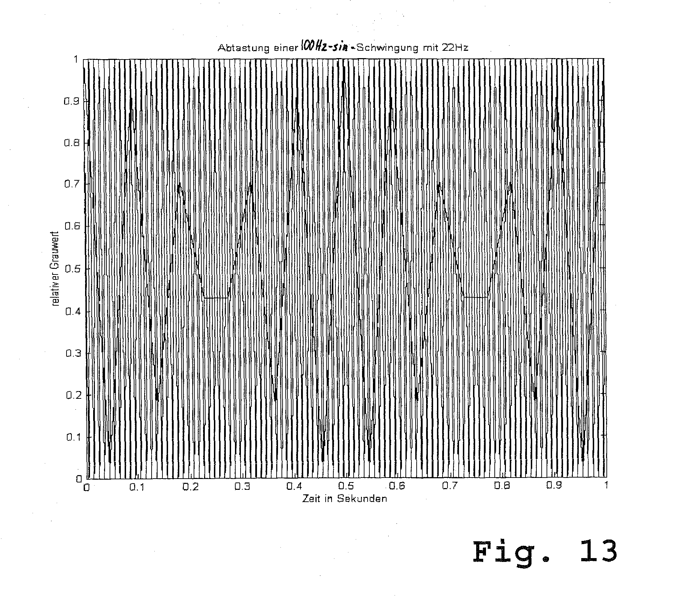

Alternativ kann ein mit Hilfe der Kameras 16, 18 erfasstes Objekt über mehrere Bilder durch ein Tracking-Verfahren verfolgt werden. Auch können Helligkeitsschwankungen des Objekts mit Hilfe mindestens einer Kamera 16, 18 mit einer voreingestellten Bildfrequenz erfasst werden, wobei durch die Abtastung mit Hilfe der Bild- bzw. Abtastfrequenz ein Signal des abgetasteten Helligkeitsverlaufs erzeugt wird, wie nachfolgend im Zusammenhang mit den Figuren 13 bis 18 noch näher erläutert wird. Dadurch kann beispielsweise ermittelt werden, ob das Objekt eine Lichtquelle ist, die mit einer Wechselspannung betrieben wird, die eine Frequenz eines üblichen Energieversorgungsnetzes hat.

Aufgrund dieser Objekteigenschaft kann mit hoher Wahrscheinlichkeit angenommen werden, dass es sich bei dieser Lichtquelle um ein ortsfestes Objekt handelt. Dadurch kann die Position des Objekts als feststehend angenommen werden. Die Position des Objekts bzw. die Entfernung des Objekts zum Personenkraftwagen 10 kann mehrmals erfasst werden, wobei die Relativgeschwindigkeit des Personenkraftwagens 10 zum ortsfesten Objekt mit Hilfe des satellitengestützten Navigationssystems oder hilfsweise mit einer anderen Geschwindigkeitsmesseinrichtung erfasst werden kann.

Bei einer anderen Alternative kann auch das ortsfeste Objekt eine Messeinrichtung umfassen, die die Position des Personenkraftwagens 10 und dessen Relativgeschwindigkeit zum Objekt umfasst. Ein solches Meßsystem kann beispielsweise ein Radar- oder Sonarsystem sein. Die Messdaten können dann über das Kommunikationsnetz zur Sende- und Empfangseinheit 24 des Personenkraftwagens 10 übertragen werden. Mit Hilfe dieser Informationen kann ebenfalls der Gierwinkel der Stereokamera 12 ermittelt werden, indem die Entfernung der Stereokamera 12 zu diesem Objekt mehrfach bestimmt wird.

Die Anordnung der Stereokamera 12, der Steuer- und Auswerteeinheit 14 sowie der Sende- und Empfangseinheit 24 für das Kommunikationsnetz sowie die Empfangseinheit 22 für das satellitengestützte Navigationssystem sind in Figur 1 rein schematisch und beispielhaft dargestellt. Selbstverständlich können diese auch an anderen geeigneten Orten im Personenkraftwagen 10 angeordnet sein. Beispielsweise kann die Stereokamera 12 auch im Frontbereich 26 beispielsweise in der Mitte zwischen den Scheinwerfern des Personenkraftwagens 10, angeordnet sein. Auch kann zusätzlich oder alternativ eine weitere Stereokamera 28 im Heckbereich des Personenkraftwagens 10 vorgesehen sein, die ebenfalls mit der Steuer- und Auswerteeinheit 14 des Stereokamerasystems verbunden ist. Die Stereokamera 28 ist im Inneren des Personenkraftwagens 10 hinter dessen Heckscheibe angeordnet. Die beiden Einzelbildkameras der Stereokamera 28 erfassen einen Bereich hinter dem Personenkraftwagen 10 und können die Entfernung zu Objekten hinter dem Personenkraftwagen 10 bestimmen. Insbesondere kann mit Hilfe der Stereokamera 28 auch eine Objektverfolgung von sich relativ zum Personenkraftwagen 10 bewegenden Objekten, vorzugsweise eine Annäherung eines Fahrzeugs an den Personenkraftwagen 10, erfasst werden. Die Hauptfahrtrichtung des Personenkraftwagens 10 ist mit einem mit P1 bezeichneten Pfeil angegeben.

In Figur 2 sind die Einzelbildkameras 16, 18 der Stereokamera 12 schematisch in deiner dreidimensionalen Darstellung gezeigt. Gleiche Elemente haben gleiche Bezugszeichen. Bei dieser schematischen Darstellung sind auch die nicht sichtbaren Linien als Volllinien dargestellt. Die Objektivoptik der Kamera 16 ist mit dem Bezugszeichen 30 und die Objektivoptik der Kamera 18 mit dem Bezugszeichen 32 bezeichnet. Die optische Achse der Kamera 16 ist mit 38 und die optische Achse der Kamera 18 mit 40 bezeichnet. Die Kamera 16 wird auch als erste Einzelbildkamera und die Kamera 18 auch als zweite Einzelbildkamera bezeichnet.

Zur Vereinfachung ist zur Beschreibung der Lage und Position der Einzelbildkameras 16,18, insbesondere der optischen Achsen der Einzelbildkameras 16, 18 zueinander, auf ein rechtwinkliges Kamerakoordinatensystem bezogen, dessen Achsen in Figur 2 mit X, Y und Z bezeichnet sind. Das Kamerakoordinatensystem kann eine beliebige Lage zu anderen Koordinatensystemen haben. Jedoch lässt sich jede Lage und jede Position jeder Einzelbildkamera 16, 18 auch in Bezug auf ein anderes Koordinatensystem, beispielsweise auf das Weltkoordinatensystem oder ein definiertes Bildkoordinatensystem, angeben. Eine Position im Kamerakoordinatensystem kann einfach in eine Position im Weltkoordinatensystem bzw. in eine Position im Bildkoordinatensystem umgerechnet werden, wenn die Lagen der beiden Koordinatensysteme zueinander bekannt sind. Ein solches Kamerakoordinatensystem wird auch zum Auswerten der mit Hilfe der Stereokamera 12 erfassten Bilder von der Steuer- und Auswerteeinheit 14 genutzt.

Der Koordinatenursprung des Kamerakoordinatensystems ist im Schnittpunkt der optischen Achse 38 der ersten Einzelbildkamera 16 mit der Bildebene 34 dieser ersten Einzelbildkamera 16 definiert. Die optische Achse 38 der ersten Einzelbildkamera 16 wird als Z-Achse des Kamerakoordinatensystems definiert. Der Vektor vom Koordinatenursprung zum Schnittpunkt der optischen Achse 40 der zweiten Einzelbildkamera 18 und die Z-Achse spannen eine Ebene auf, in der die orthogonal zur Z-Achse verlaufende X-Achse angeordnet wird. Die Y-Achse verläuft orthogonal zur X-Achse und orthogonal zur Z-Achse.

Im Ausführungsbeispiel nach Figur 2 liegt auch der Schnittpunkt der optischen Achse der zweiten Einzelbildkamera 18 mit deren Bildebene auf der X-Achse des Kamerakoordinatensystems. Der Abstand zwischen den Schnittpunkten der optischen Achsen 38, 40 der jeweiligen Kamera 16, 18 mit deren Bildebenen 34, 36 wird als Basisbreite bezeichnet, wobei die Einzelbildkameras 16, 18 um einen Wert V=(Basisbreite, 0, 0) versetzt angeordnet sind, wenn diese Schnittpunkte wie im Ausführungsbeispiel nach Figur 2 auf der X-Achse liegen.

Durch die Übereinstimmung der optischen Achse 38 der ersten Einzelbildkamera 16 mit der Z-Achse wird die Bestimmung der relativen Lagen der optischen Achsen 38, 40 der Einzelbildkameras zueinander stark vereinfacht. Ferner wird durch dieses Kamerakoordinatensystem eine Abhängigkeit zu anderen Koordinatensystemen vermieden. Werden die Einzelbildkameras 16,18 im Weltkoordinatensystem direkt nebeneinander in einer horizontalen Ebene angeordnet, verlaufen die X-Achse und die Z-Achse des Kamerakoordinatensystems im Weltkoordinatensystem im Wesentlichen waagerecht und die Y-Achse im Wesentlichen senkrecht. Ein solches Kamerakoordinatensystem hat insbesondere bei Installation des Stereokamerasystems in einem sich im dreidimensionalen Raum des Weltkoordinatensystems bewegten Fahrzeug 10 den Vorteil, dass die Lagen der Koordinatensysteme zueinander nicht laufend bestimmt und bei der Auswertung und Analyse der erfassten Bilder, beispielsweise zur Bestimmung der Entfernung eines erfassten Objekts, nicht unmittelbar berücksichtigt werden müssen.

Die zum Erfassen von Objekten entscheidenden Winkel sind wie folgt definiert:
- Der Wankwinkel ist der Winkel, um den eine Einzelbildkamera um die Z-Achse gedreht ist. Eine solche Drehung ist in Figur 2 durch den Pfeil P2 angedeutet. Durch die Definition des Kamerakoordinatensystems hat die erste Einzelbildkamera 16 einen Wankwinkel von 0°. Eine von 0° abweichende Winkelposition der zweiten Einzelbildkamera 18 ist der Wankwinkelfehler oder der Wankwinkel der Stereokamera 12.
- Der Nickwinkel ist der Winkel, um den eine Einzelbildkamera um die X-Achse gedreht ist. Eine solche Drehung ist in Figur 2 durch den Pfeil P4 angedeutet. Durch die Definition des Kamerakoordinatensystems hat die erste Einzelbildkamera 16 einen Nickwinkel von 0°. Eine von 0° abweichende Winkelposition der zweiten Einzelbildkamera 18 ist der Nickwinkelfehler oder der Nickwinkel der Stereokamera12. Der Nickwinkel wird auch als PITCH-Winkel bezeichnet.
- Der Gierwinkel ist der Winkel, um den eine Einzelbildkamera um die Y-Achse gedreht ist. Eine solche Drehung ist in Figur 2 durch den Pfeil P3 angedeutet. Durch die Definition des Kamerakoordinatensystems hat die erste Einzelbildkamera 16 einen Gierwinkel von 0°. Eine von 0° abweichende Winkelposition der zweiten Einzelbildkamera 18 ist der Gierwinkelfehler oder der Gierwinkel der Stereokamera 12. Der Gierwinkel wird auch als YAW-Winkel bezeichnet.

Das Kamerakoordinatensystem ist vorzugsweise ein rechtshändiges Koordinatensystem, wobei dich die Winkelangaben der Wankwinkel, Nickwinkel und Gierwinkel auf die Richtungen dieser Winkel im rechtshändigen Koordinatensystem beziehen. Die Begriffe Wankwinkel, Nickwinkel und Gierwinkel stimmen im Wesentlichen mit den ebenso benannten Winkeln bei der Ausrichtung eines Flugzeugs überein. Alternativ kann auch jeweils ein Einzelbildkamerakoordinatensystem vorgesehen werden, wobei die Lage der Achsen der Einzelbildkamerakoordinatensysteme zueinander analysiert wird.

Ferner werden die mit Hilfe der beiden Einzelbildkameras 16, 18 der Stereokamera 12 gleichzeitig aufgenommene Bilder auch als Bildpaar bezeichnet.

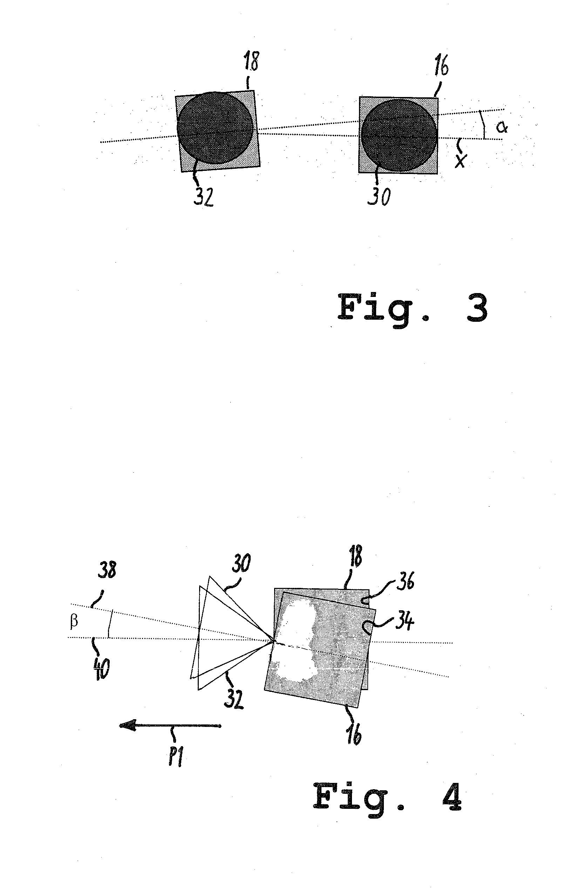

In Figur 3 sind die Einzelbildkameras 16, 18 nach Figur 2 in einer Vorderansicht durch die Frontscheibe des Personenkraftwagens 10 hindurch dargestellt. Der Wankwinkel der Einzelbildkamera 16 ist Die Einzelbildkamera 18 ist um einen Wankwinkel α um die Z-Achse gedreht gegenüber der Kamera 16 angeordnet. Der Wankwinkel α der Stereokamera 12 wird mit Hilfe eines Bildanalyse- und -auswerteverfahrens bestimmt und bei der nachfolgenden Bildverarbeitung und Bildanalyse berücksichtigt. Der Wankwinkel wird auch als Rollwinkel bezeichnet.

In Figur 4 ist eine Seitenansicht der Kameras 16, 18 dargestellt. Der Nickwinkel der ersten Einzelbildkamera 16 ist durch die Definition des Kamerakoordinatensystems mit 0° definiert. Dadurch hat die zweite Einzelbildkamera 18 einen Nickwinkel β. Mit Hilfe eines durch die Einzelbildkameras 16, 18 erfassten Bildpaars kann der Nickwinkel β der Einzelbildkamera 18 bestimmt werden, der dann bei de Verarbeitung und Analyse weiterer Bilder berücksichtigt werden kann.

Bei einer Anordnung der Einzelbildkameras 16, 18 im Weltkoordinatensystem waagerecht nebeneinander wird durch die Einzelbildkamera 18 zumindest auch ein Bereich unterhalb des mit Hilfe der Einzelbildkamera 16 erfassten Bereichs erfasst. Dadurch stimmen die mit Hilfe der Einzelbildkameras 16 und 18 erfassten Bereiche, d. h. die mit Hilfe der Einzelbildkameras 16, 18 erfassten Bilder, nicht vollständig überein.

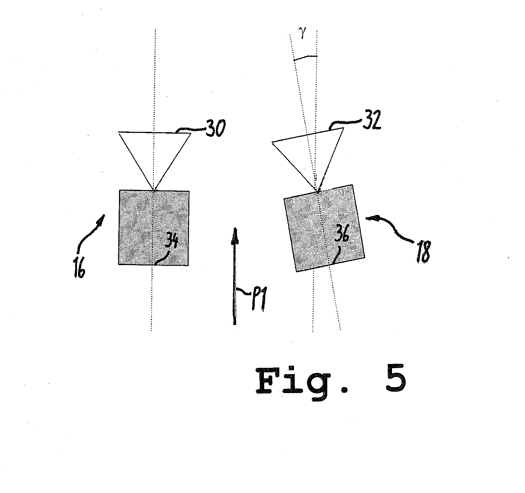

In Figur 5 sind die Einzelbildkameras 16, 18 der Stereokamera 12 mit ihren optischen Achsen 38, 40 in einer Draufsicht auf die X-Z-Ebene des Kamerakoordinatensystems dargestellt. Der Gierwinkel der ersten Einzelbildkamera 16 beträgt durch die Definition des Kamerakoordinatensystems 0°. Die zweite Einzelbildkamera 18 hat durch ihre Drehung um die die Y-Achse einen Gierwinkel γ.

Wenn der Nickwinkel und der Wankwinkel 0° betragen, schneiden sich die optischen Achsen 38, 40 unter dem Gierwinkel γ. Der Gierwinkel γ der zweiten Einzelbildkamera 18 wird wie bereits erwähnt auch als Gierwinkelfehler oder als Gierwinkel der Stereokamera 12 bezeichnet.

Zur Verdeutlichung ist die optische Achse 38 parallel verschoben worden, so dass sie die optische Achse 40 in deren Schnittpunkt mit dem Bilderfassungsbereich 36 der Einzelbildkamera 18 schneidet. Die parallel verschobene optische Achse 38 ist mit 38' bezeichnet. Die optischen Achsen 40, 38' spannen den Gierwinkel γ auf, um den die optischen Achsen 38, 40 der Einzelbildkameras 16, 18 gedreht angeordnet sind. Für eine exakte Entfernungsmessung, d.h. zu einer exakten Bestimmung der Entfernung eines mit Hilfe der Einzelbildkameras 16, 18 erfassten Objekts, ist die Kenntnis des exakten Gierwinkels γ unbedingt erforderlich.

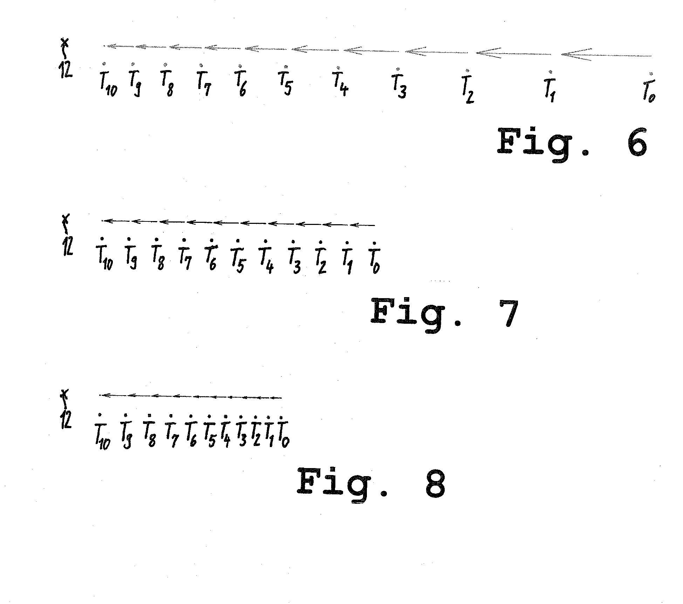

In Figur 6 ist die Position eines mit Hilfe eines Punkts dargestellten Objekts während der Annäherung an die Stereokamera 12 zu den Zeitpunkten T0 bis T10 dargestellt. Die Kameras 16, 18 des Stereokamerasystems erfassen gleichzeitig ein Bild, in denen jeweils das als Punkt dargestellte Objekt ermittelt wird. Mit Hilfe der beiden Bilder, den voreingestellten Nick-, Roll- und Gierwinkel der Kameras 16, 18, wird die Entfernung des Objekts jeweils zum Zeitpunkt T0 bis T10 ermittelt. Die Kameras 16, 18 des Stereokamerasystems nehmen in einem Zeitintervall von 0,045 Sekunden bzw. mit einer Bildwiederholfrequenz von 22 Hz zwei Bildpaare auf, mit denen dann die Entfernung ermittelt wird.

Das Objekt nach Figur 6 nähert sich jedoch tatsächlich mit einer gleichmäßigen Geschwindigkeit an die Stereokamera 12 an. Jedoch wird der scheinbar zwischen zwei Bildpaaren, d.h. zwischen zwei Zeitpunkten T0 bis T10, zurückgelegte Weg des Objekts jeweils kürzer obwohl der Abstand zwischen der Stereokamera 12 und dem Objekt zwischen zwei Zeitpunkten T0 bis T10 jeweils gleich groß ist. Der zurückgelegte Weg des Objekts zwischen zwei Zeitpunkten ist mit Hilfe der oberhalb der Objekte dargestellten Pfeile verdeutlicht. Die durch die Länge der Pfeile sichtbare Abweichung zwischen dem tatsächlich zurückgelegten Weg und dem mit Hilfe der Stereokamera 12 gemessenen zurückgelegten Weg des Objekts zwischen den jeweiligen Zeitpunkten T0 bis T10 ist auf einen nicht korrekt voreingestellten Gierwinkel γ zurückzuführen. Bei der Darstellung nach Figur 6 ist ein geringerer Gierwinkel γ zur Auswertung der aufgenommenen Bilder voreingestellt als der tatsächlich zwischen den optischen Achsen 38, 40 der Kamera 16, 18 vorhandene Gierwinkel γ.

In Figur 7 ist die Position des Objekts während der Annäherung an die Stereokamera 12 zu den Zeitpunkten T0 bis T10 mit einem korrekt voreingestellten Gierwinkel γ dargestellt. Das Stereokamerasystem ermittelt, dass zwischen jeweils zwei Zeitpunkten T0 bis T10 derselbe Weg zwischen der Stereokamera 12 und dem Objekt zurückgelegt wird. Dies stimmt mit der tatsächlichen Annäherung des Objekts an die Kamera 12 überein.

In Figur 8 ist die Position des Objekts während der Annäherung an die Stereokamera 12 zu den Zeitpunkten T0 bis T10 dargestellt, wobei ein zu großer Gierwinkel γ voreingestellt ist. Aufgrund des zu groß voreingestellten Gierwinkels γ wird der bei der Annäherung des Objekts an die Kamera 12 zurückgelegte Weg bei einer größeren Entfernung des Objekts von der Stereokamera 12 kürzer als der tatsächlich zurückgelegte Weg ermittelt. Der tatsächlich zurückgelegte Weg ist in Figur 7 korrekt dargestellt.

Zwischen zwei Zeitpunkten T0 bis T10 liegt jeweils derselbe Zeitraum, beispielsweise 0,045 Sekunden. Aus den Figuren 6 bis 8 ist somit ersichtlich, dass bei einem zu gering eingestellten Gierwinkel γ gemäß Figur 6 der zwischen zwei Zeitpunkten T0 bis T10 gemessene zurückgelegte Weg zwischen Objekt und Stereokamera 12 mit zunehmender Entfernung zwischen Objekt und Stereokamera 12 zunimmt und der gemessene zurückgelegte Weg bei einem zu groß eingestellten Gierwinkel γ gemäß Figur 8 mit zunehmender Entfernung zwischen Stereokamera 12 und Objekt kleiner wird.

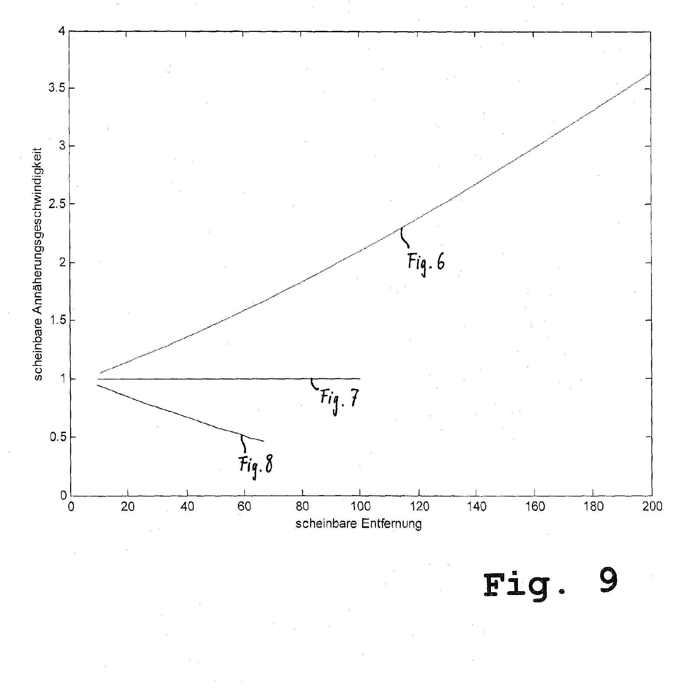

In Figur 9 sind die Verhältnisse zwischen der ermittelten scheinbaren Entfernung und der scheinbaren Annäherungsgeschwindigkeit des Objekts an die Stereokamera 12 nach den Figuren 6 bis 8 in einem Diagramm dargestellt. Die dort abgebildeten Graphen sind mit den jeweiligen Figurenbezeichnungen der Figuren 6 bis 8 als Bezugszeichen gekennzeichnet. Aus Figur 9 wird das bereits im Zusammenhang mit den Figuren 6 bis 8 erläuterte Prinzip der falsch ermittelten Annäherungsgeschwindigkeit aufgrund eines falsch voreingestellten Gierwinkels γ zur Auswertung der mit Hilfe der Kamera 16, 18 aufgenommenen Bilder verdeutlicht.

Bei einem korrekt voreingestellten Gierwinkel γ gemäß Figur 7 entspricht die scheinbare, d.h. die bestimmte, Annäherungsgeschwindigkeit der tatsächlichen Annäherungsgeschwindigkeit zwischen Objekt und Stereokamera 12. Die Annäherungsgeschwindigkeit ist konstant 1. Bei einem zu gering eingestellten Gierwinkel γ nimmt die scheinbare Annäherungsgeschwindigkeit des Objekts mit zunehmender scheinbarer Entfernung infolge des sich vergrößernden Fehlers mit zunehmender Entfernung zu. Bei einem zu groß voreingestellten Gierwinkel γ gemäß Figur 8 wird mit zunehmender Entfernung zwischen Objekt und Stereokamera 12 eine zunehmend geringere scheinbare Annäherungsgeschwindigkeit mit Hilfe des Stereokamerasystems ermittelt.

In Figur 10 ist ein Ablaufplan zum Ermitteln von Korrekturwerten für die Nickwinkel und Wankwinkel der Stereokamera 12 dargestellt. Im Schritt S10 wird der Ablauf gestartet. Anschließend wird im Schritt S12 je ein Bild mit Hilfe der Kameras 16, 18 des Stereokamerasystems gleichzeitig erfasst. Anschließend werden im Schritt S14 mindestens zwei Bildkorrespondenzen in beiden Bildern bestimmt. Zur Erhöhung der Genauigkeit werden bei alternativen Abläufen mehr als zwei Bildkorrespondenzen, vorzugsweise mindestens fünf Korrespondenzen in beiden Bildern ermittelt. In der Praxis haben sich zwei bis zehn Bildkorrespondenzen als vorteilhaft erwiesen.

Im Schritt S16 werden dann mit Hilfe von aus der projektiven Geometrie abgeleiteten Rechenschritten eine Berechnung von Korrekturwerten für voreingestellte Nickwinkel β und Wankwinkel α berechnet. Die dabei ermittelten Werte für Nickwinkel β und Wankwinkel α werden dann als neue voreingestellte Werte für Nickwinkel und Wankwinkel α in der Steuer- und Auswerteeinheit 14 des Stereokamerasystems gespeichert und bei einer nachfolgenden Auswertung von weiteren erfassten Bildern, insbesondere bei der Entfernungsmessung mit Hilfe der erfassten Bildpaare, berücksichtigt. Anschließend wird der Ablauf im Schritt S18 beendet. Der im Zusammenhang mit Figur 10 beschriebene Ablauf wird vorzugsweise wiederholt abgearbeitet, beispielsweise nach jeder Erfassung eines Bildpaares.

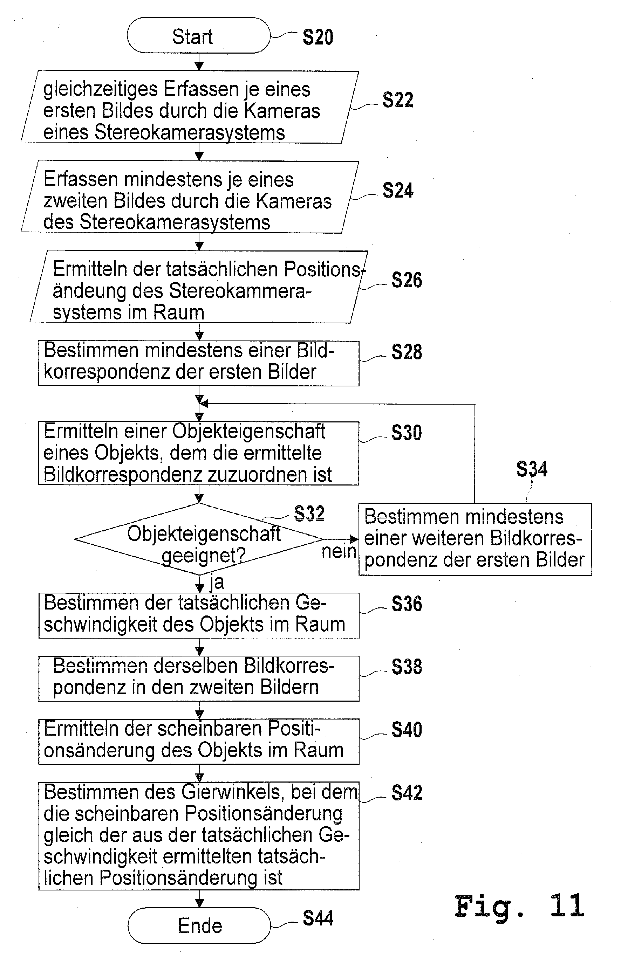

In Figur 11 ist ein Ablauf zum Ermitteln eines tatsächlichen Gierwinkels γ zwischen den Kameras 16, 18 des Stereokamerasystems dargestellt. Der Ablauf wird im Schritt S20 gestartet. Anschließend wird im Schritt S22 je ein erstes Bild mit Hilfe der Kameras 16, 18 des Stereokamerasystems gleichzeitig erfasst. Nach einer voreingestellten Zeit, insbesondere nach 0,045 Sekunden wird zumindest je ein zweites Bild mit Hilfe der Kameras 16, 18 erfasst. Im Schritt S26 wird dann die Änderung der tatsächlichen Position der Stereokamera 12 im Raum zwischen dem Erfassen der ersten Bilder und dem Erfassen der zweiten Bilder ermittelt. Beispielsweise wird diese Positionsänderung mit Hilfe des satellitengestützten Navigationssystems und/oder eines von einem Geschwindigkeitsmesssystem des Personenkraftwagens 10 zur Verfügung gestellten Geschwindigkeitsmesswerts ermittelt, in dem die Stereokamera 12 fest angeordnet ist.

Im Schritt S28 ermittelt dann die Steuer- und Auswerteeinheit 14 des Stereokamerasystems mindestens eine Bildkorrespondenz in den ersten Bildern. Die Bildkorrespondenz wird vorzugsweise mit Hilfe von bekannten Bildauswerte- und Bildanalyseverfahren bestimmt. Anschließend wird im Schritt S30 eine Objekteigenschaft eines Objekts ermittelt, dem die ermittelte Bildkorrespondenz zuzuordnen ist. Das Ermitteln der Objekteigenschaft kann beispielsweise mit Hilfe eines Verfahrens erfolgen, durch das der Helligkeitsverlauf einer mit Hilfe der Kameras 16, 18 aufgenommenen Abbildung des Objekts abgetastet wird und der abgetastete Helligkeitsverlauf auf markante Übereinstimmungen mit voreingestellten Helligkeitsverläufen verglichen wird. Dadurch kann beispielsweise überprüft werden, ob es sich bei dem Objekt um eine Lichtquelle bzw. um ein Leuchtmittel handelt, die/das mit einer Wechselspannung eines Energieversorgungsnetzes gespeist wird.

Ausgehend von dieser Objekteigenschaft kann beispielsweise für den weitern Ablauf angenommen werden, dass es sich bei dem ermittelten Objekt um ein ortsfestes Objekt bzw. eine ortsfeste Lichtquelle handelt. Im Schritt S32 wird anschließend überprüft, ob die ermittelte Objekteigenschaft des Objekts für den weiteren Ablauf in geeigneter Weise genutzt werden kann. Ist das nicht der Fall, so wird anschließend im Schritt S32 mindestens eine weitere Bildkorrespondenz der ersten Bilder ermittelt. Nachfolgend wird im Schritt S30 wiederum eine Objekteigenschaft eines Objekts ermittelt, dem die dann im Schritt S34 ermittelte Bildkorrespondenz zuzuordnen ist.

Wird im Schritt S32 festgestellt, dass die ermittelte Objekteigenschaft für den weiteren Verfahrensablauf geeignet erscheint, wird anschließend im Schritt S36 die tatsächliche Geschwindigkeit des Objekts im Raum bestimmt. Kann aufgrund der Objekteigenschaft geschlussfolgert werden, dass es sich bei dem ermittelten Objekt um ein ortsfestes Objekt handelt, ist die Geschwindigkeit des Objekts im Raum 0 m/s. Alternativ kann sowohl die Objekteigenschaft als auch die Geschwindigkeit des Objekts im Raum von einer mit diesem Objekt verbundenen Kommunikationseinrichtung vorzugsweise über ein Kommunikationsnetz oder von einer weiteren unabhängigen Messeinrichtung ermittelt und zum Personenkraftwagen 10 übertragen werden. Anschließend wird im Schritt S38 dieselbe Bildkorrespondenz in den zweiten Bildern bestimmt. Im Schritt S40 wird dann die scheinbare Positionsänderung des Objekts im Raum ermittelt. Im Schritt S32 wird dann der Gierwinkel γ bestimmt, bei dem die scheinbare Positionsänderung gleich der aus der tatsächlichen Geschwindigkeit bestimmten tatsächlichen Positionsänderung ist. Der Ablauf ist anschließend im Schritt S44 beendet.

Alternativ kann im Schritt S40 die scheinbare Geschwindigkeit des Objekts im Raum ermittelt werden. Anschließend wird dann im Schritt S42 der Gierwinkel bestimmt, bei dem die scheinbare Geschwindigkeit gleich der tatsächlichen Geschwindigkeit ist. Der ermittelte Gierwinkel γ dient als Kalibrierparameter zum Kalibrieren oder zu einer Justage des Stereokamerasystems. Zum Kalibrieren kann der ermittelte Gierwinkel bei der Auswertung der mit Hilfe der Stereokamera 12 aufgenommenen Bildern beim Bestimmen der Entfernung zwischen Stereokamera 12 und einem weiteren Objekt genutzt werden.

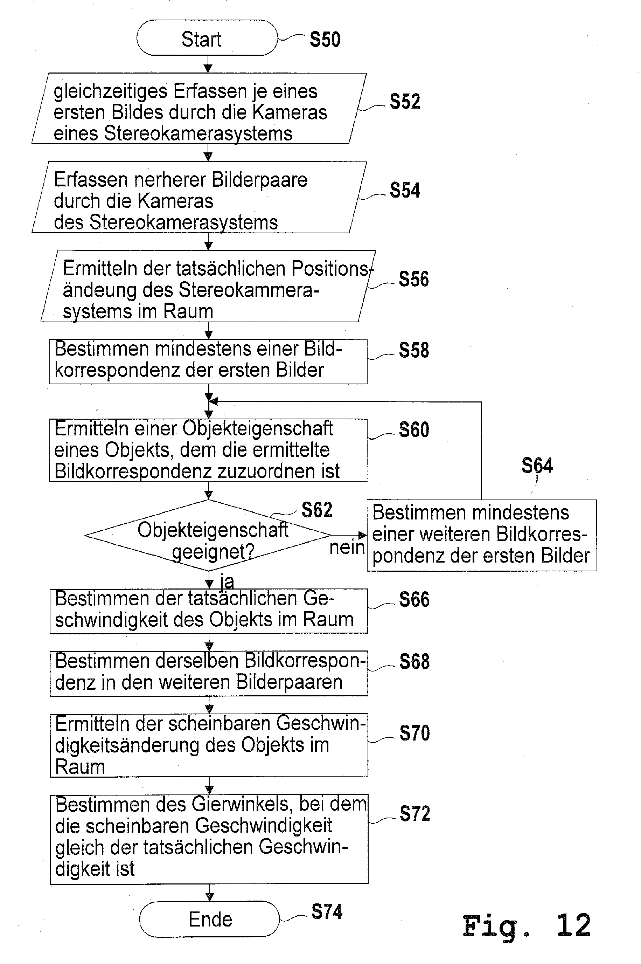

In Figur 12 ist ein alternativer Ablauf zu dem in Figur 10 dargestellten Ablauf zum Ermitteln des Gierwinkels γ der Kameras 16, 18 und der Stereokamera 12 dargestellt. Der Ablauf wird im Schritt S50 gestartet. Anschließend wird im Schritt S52 je ein erstes Bild, d.h. ein erstes Bildpaar, mit Hilfe der Kameras 16, 18 des Stereokamerasystems gleichzeitig erfasst. Im Schritt S54 werden dann in einem festen voreingestellten Zeitintervall nacheinander mehrere Bildpaare durch die Kameras 16, 18 erfasst. Im Schritt S56 wird dann die tatsächliche Positionsänderung der Stereokamera 12 im Raum während der Zeitintervalle ermittelt.

Im Schritt S58 wird mindestens eine Bildkorrespondenz in den ersten Bildern bestimmt. Anschließend wird im Schritt S60 mit Hilfe von mehreren nacheinander erfassten Bildpaaren eine Objekteigenschaft des Objekts ermittelt, dem die ermittelte Bildkorrespondenz zuzuordnen ist. Anschließend wird im Schritt S62 überprüft, ob die ermittelte Objekteigenschaft für den weiteren Verfahrensablauf geeignet ist, d.h. ob mit Hilfe des Objekts der aktuelle Gierwinkels γ der Stereokamera 12 bzw. der Kamera 18 zum Kamerakoordinatensystem bestimmbar ist. Ist das nicht der Fall, so wird anschließend im Schritt S64 mindestens eine Bildkorrespondenz in den erfassten Bildern ermittelt und der Ablauf im Schritt S60 fortgesetzt.

Wird im Schritt S62 jedoch ermittelt, dass die Objekteigenschaft für den weiteren Verfahrensablauf geeignet ist, bzw. dass das Objekt für den weiteren Verfahrensablauf geeignet ist, wird im Schritt S66 die tatsächliche Geschwindigkeit des Objekts im Raum ermittelt. Dies kann in gleicher Weise erfolgen, wie im Zusammenhang mit Figur 11, S36, nach beschrieben. Im Schritt S68 wird dieselbe Bildkorrespondenz in den Abbildungen der weiteren Bildpaare bestimmt. Anschließend wird im Schritt S70 die im Schritt S68 in den weiteren Bildpaaren bestimmte Bildkorrespondenz verfolgt, vorzugsweise mit Hilfe eines so genannten Tracking-Verfahrens, wobei über diesen Verfolgungszeitraum eine scheinbare Geschwindigkeit des Objekts im Raum ermittelt wird.

Das Ermitteln der Geschwindigkeit mit mehreren weiteren Bildpaaren erhöht die Genauigkeit der ermittelten scheinbaren Geschwindigkeit. Im Schritt S72 wird dann der Gierwinkel γ bestimmt, bei dem die scheinbare Geschwindigkeit gleich der tatsächlichen Geschwindigkeit ist. Anschließend ist der Ablauf im Schritt S74 beendet. Auch bei dem Verfahrensablauf nach Figur 12 kann der ermittelte Gierwinkel γ als Kalibrierparameter für die weitere Auswertung von mit Hilfe der Einzelbildkameras erfassten Bildern oder zur Neukalibrierung mindestens einer Einzelbildkamera der Stereokamera 12 genutzt werden. Die Genauigkeit und Zuverlässigkeit der Abläufe nach den Figuren 11 und 12 kann weiter erhöht werden, indem mehrere Bildkorrespondenzen in den Bildpaaren ermittelt werden, die vorzugsweise demselben Objekt zuzuordnen sind.

In Figur 13 ist der Verlauf der Helligkeitsschwankung einer mit einer 50 Hz Wechselspannung gespeisten Lichtquelle dargestellt, wobei die Helligkeitsschwankung als relativer Grauwert mit Hilfe einer der Kameras 16, 18 des Stereokamerasystems aufgenommenen Bildfolge ermittelt und angegeben ist.

Diese Kamera 16, 18 erzeugt Bilder im Abstand von 0,045 Sekunden, das heißt mit einer Frequenz von 22 Hz Abbildungen des Objekts. Es wird die Helligkeit des Objekts in diesen Bildern ermittelt. Mit Hilfe der ermittelten Helligkeitswerte wird ein resultierender Helligkeitsverlauf ermittelt. Eine mit 50 Hz Wechselspannung betriebenen Lichtquelle hat eine Helligkeitsschwankung von 100 Hz. Die tatsächliche Helligkeit und die durch die Abtastung resultierende Helligkeit der Lichtquelle ist auf einer Skala von 0 bis 1 als relativer Wert auf der Y-Achse des Diagramms der Figur 13 angetragen. Auf der X-Achse ist der zeitliche Verlauf von 0 bis 1 Sekunden angetragen. Aufgrund der Abtastung der 100 Hz Helligkeitsschwankung der Lichtquelle mit einer Abtastfrequenz von 22 Hz ergibt sich ein markanter Helligkeitsverlauf, der insbesondere die Überlagerung der 100 Hz Helligkeitsschwingung und der 22 Hz Abtastfrequenz ist. Eine derartige Überlagerung wird auch als Schwebung bezeichnet.

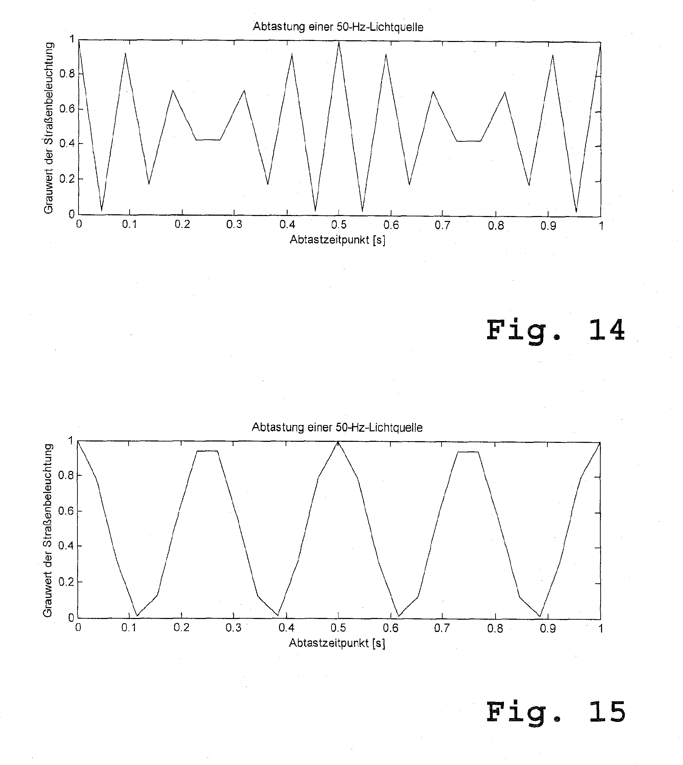

In Figur 14 ist der durch die mit einer Abtastfrequenz von 22 Hz abgetastete 100 Hz Helligkeitsschwankung der mit 50 Hz Wechselspannung gespeisten Lichtquelle dargestellt. Es ergibt sich dabei der bereits in Figur 13 dargestellte Helligkeitsverlauf, der nachfolgend in Figur 14 ohne die 100 Hz Grundschwingung der mit 50 Hz Wechselspannung gespeisten Lichtquelle dargestellt ist.

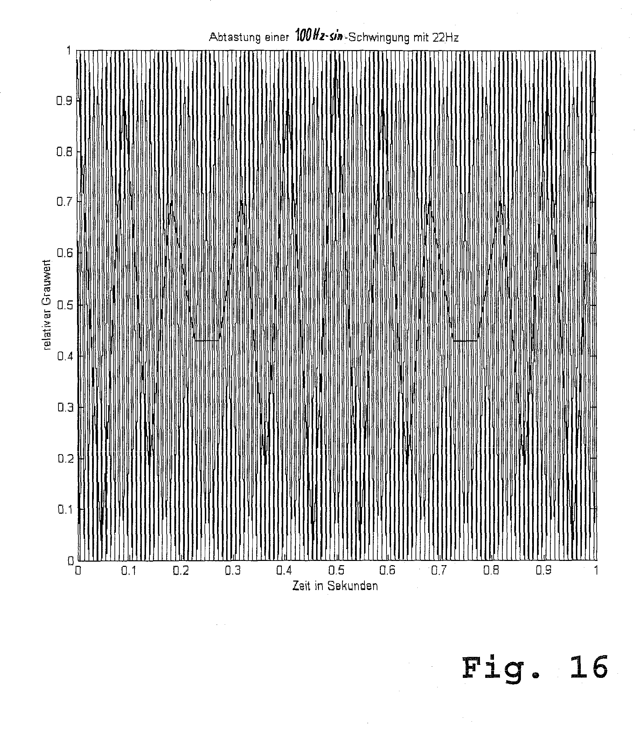

In Figur 15 ist der resultierende Helligkeitsverlauf der Abtastung der 100 Hz Helligkeitsschwankung einer mit 50 Hz Wechselspannung versorgten Lichtquelle dargestellt. Die Abtastfrequenz zum Ermitteln des in Figur 16 dargestellten Helligkeitsverlaufs beträgt etwa 26 Hz. Dadurch ergibt sich ein weniger markanter Helligkeitsverlauf als der in Figur 15 gezeigte. Jedoch kann auch durch einen Vergleich des in Figur 15 dargestellten Helligkeitsverlaufs mit möglichen voreingestellten Helligkeitsverläufen ermittelt werden, dass es sich bei dem Objekt um eine mit 50 Hz Wechselspannung gespeiste Lichtquelle handelt, insbesondere um eine öffentliche Straßenbeleuchtung.

In Figur 16 ist die Abtastung einer 120 Hz Helligkeitsschwankung mit einer Abtastfrequenz von 22 Hz einer mit einer 60 Hz Wechselspannung gespeisten Lichtquelle als relativer Grauwert in Abhängigkeit der Zeit dargestellt. Der durch die Abtastung erzeugte Helligkeitsverlauf stimmt im Wesentlichen mit dem bei einer Abtastung von 22 Hz erzeugte Helligkeitsverlauf einer mit 50 Hz Wechselspannung versorgten Lichtquelle mit einer Helligkeitsschwankung von 100 Hz überein.

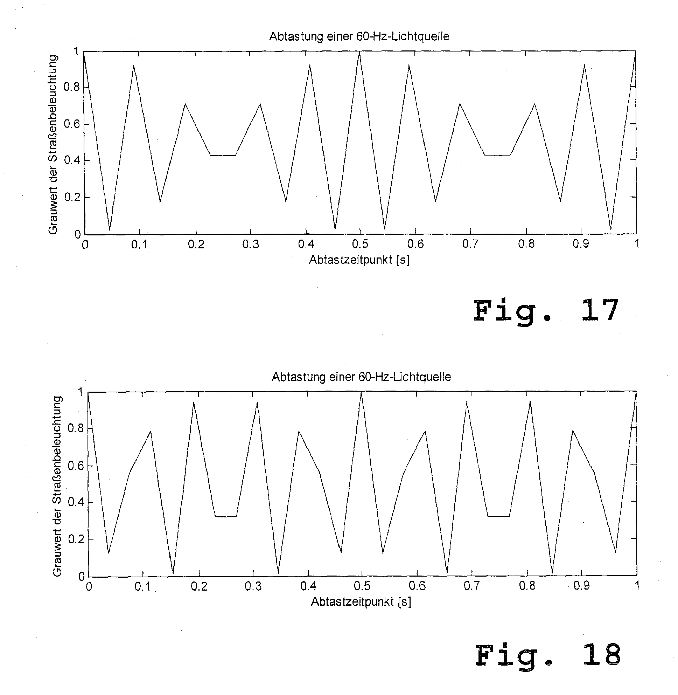

In Figur 17 ist der durch die Abtastung mit 22 Hz Abtastfrequenz erzeugte Helligkeitsverlauf der mit 60 Hz Wechselspannung betriebenen Lichtquelle nach Figur 16 ohne die 120 Hz Grundschwankung dargestellt. Somit hat die Abtastfrequenz von 22 Hz den Vorteil, dass die infolge der Abtastung erzeugten Helligkeitsverläufe der Helligkeitsschwankung einer mit 50 Hz Wechselspannung betriebenen und einer mit 60 Hz Wechselspannung betriebenen Lichtquelle im wesentlichen übereinstimmt, wodurch die Auswertung erheblich vereinfacht ist. Durch die unterschiedlichen Frequenzen der Wechselspannung in öffentlichen Energieversorgungsnetzen, beispielsweise in Europa und in den USA (Europa: 50 Hz; USA: 60 Hz), kann ohne eine Änderung der Abtastfrequenz und ohne andere Vergleichsverläufe erkannt werden, ob es sich bei der Lichtquelle um eine mit 50 oder 60 Hz Wechselspannung betriebene Lichtquelle und somit um ein ortsfestes Objekt handelt.

Jedoch können alternativ bei einer Abtastung mit anderen Abtastfrequenzen Unterschiede in den Helligkeitsverläufen dazu genutzt werden, um zu ermitteln, ob es sich bei der Lichtquelle um eine mit 50 Hz Wechselspannung oder mit 60 Hz Wechselspannung betriebene Lichtquelle handelt. Um das erfindungsgemäße Verfahren zum Ermitteln von einer Objekteigenschaft, insbesondere der Objekteigenschaft mit 50/60 Hz Wechselspannung betriebenen Lichtquelle zu ermitteln, können jedoch auch unterschiedliche Helligkeitsverläufe durch die Abtastung mit Hilfe von nacheinander aufgenommenen Bildern erzeugt werden, die dann ausgewertet und mit voreingestellten Helligkeitsverläufen verglichen werden. Bei einer überwiegend wahrscheinlichen Übereinstimmung wird dann festgestellt, dass es sich bei dem Objekt um eine Lichtquelle bzw. ein Leuchtmittel handelt, das mit einer Frequenz von 50/60 Hz betrieben wird.

In Figur 18 ist der resultierende Helligkeitsverlauf bei der Abtastung einer mit 60 Hz Wechselspannung betriebenen Lichtquelle bei einer Abtastfrequenz von 26 Hz dargestellt. Der in Figur 18 dargestellte Helligkeitsverlauf weicht von dem in Figur 15 dargestellten Helligkeitsverlauf ab, so dass mit Hilfe dieser Abweichung ermittelt werden kann, dass es sich bei dem in Figur 18 dargestellten Helligkeitsverlauf nicht um eine mit 50 Hz Wechselspannung betriebene Lichtquelle sondern um eine mit 60 Hz betriebene Lichtquelle handelt.

In den Figuren 13 bis 18 sind die Helligkeitsschwankungen einer Lichtquelle einer öffentlichen Straßenbeleuchtung mit Hilfe eines Grauwerts, der mit Hilfe einer der Kameras 16, 18 ermittelt worden ist, dargestellt. Jedoch kann auch jede andere beliebige Lichtquelle als Objekt erfasst werden, wie z.B. die Lichtquellen von Ampelanlagen oder beleuchteten Verkehrszeichen. Aber auch die Lichtquellen zur Beleuchtung von Gebäuden oder Räumen können mit Hilfe der Abtastung derart bestimmt werden, dass ermittelt wird, dass es sich bei diesen Lichtquellen um eine mit einer 50 Hz bzw. einer 60 Hz Wechselspannung versorgten Lichtquelle handelt. Eine solche Lichtquelle kann dann als ortsfest angenommen werden. Die tatsächliche Geschwindigkeit zwischen dieser Kamera und dieser Lichtquelle ist dann die tatsächliche Geschwindigkeit der Stereokamera im Raum, insbesondere die Geschwindigkeit eines Fahrzeugs, mit dem die Stereokamera fest verbunden ist. Mit Hilfe dieser tatsächlichen Geschwindigkeit der Stereokamera kann auch auf einfache Art und Weise eine tatsächliche Entfernungsänderung in einem Zeitraum bestimmt werden. Bei einer ungleichförmigen Bewegung der Stereokamera wird der Mittelwert der Geschwindigkeit während des Zeitraums bestimmt. Vorzugsweise wird die Geschwindigkeit über den Zeitraum integriert.

Die im Zusammenhang mit den Figuren 1 bis 18 beschriebenen Verfahren sind allgemein bei Stereokameras 12 vorteilhaft einsetzbar. Die Stereokameras können dabei im Unterschied zu der in Figur 1 gezeigten Stereokamera 12 ortsfest angeordnet sein, wobei die zu bestimmenden Objekte vorzugsweise eine Relativbewegung zu der Stereokamera haben. Die Stereokamera kann jedoch auch in anderen bewegten Objekten angeordnet sein, beispielsweise in Schienenfahrzeugen, Luftfahrzeugen und Seefahrzeugen. Ferner können die Stereokamera 12 und die weiteren Elemente 14 bis 24 in anderen Kraftfahrzeugen, vorzugsweise in Lastkraftwagen oder Bussen vorteilhaft eingesetzt werden. Zusätzlich können die mit Hilfe der Kameras 16, 18 aufgenommenen Bilder auch auf Anzeigeeinheiten im jeweiligen Fahrzeug oder außerhalb des Fahrzeugs angezeigt sowie mit Hilfe eines Kommunikationsnetzes übertragen werden.

Bei der Überlagerung der 100 Hz und 120 Hz Helligkeitsschwankungen nach den Figuren 12, 13, 15 und 16 mit der Abtastfrequenz von 22 Hz ergibt sich dadurch der im wesentlichen übereinstimmende Verlauf der resultierenden Helligkeit bei 100 Hz und 120 Hz, da sich durch das Abtasten jeweils eine 10 Hz-Schwingung nach den Gleichungen:
100Hz - 5 * 22Hz = -10Hz
120Hz - 5 * 22Hz = 10Hz
ergibt. Überlagert wird die resultierende 10 Hz Schwingung von einer harmonischen Schwingung nach folgender Gleichung:
100Hz - 4 * 22Hz = 12Hz
120Hz - 6 * 22Hz = -12Hz

Somit führen alle Abtastfrequenzen zu demselben Helligkeitsverlauf beim Abtasten der 100 Hz und der 120 Hz Schwingung, bei denen die Gleichung:
Grundfrequenz der Helligkeit - n * Abtastfrequenz
denselben Betrag ergibt.

Das Steuern der beschriebenen Verfahrensabläufe erfolgt vorzugsweise mit Hilfe einer Datenverarbeitungsanlage, insbesondere mit Hilfe eines digitalen Signalprozessors (DSP), die bzw. der ein spezielles Computerprogramm abarbeitet, wodurch zumindest ein Teil der beschriebenen Verfahrensschritte ausgeführt werden.

Obgleich in den Zeichnungen und in der vorhergehenden Beschreibung bevorzugte Ausführungsbeispiele aufgezeigt und detailliert beschrieben worden sind, sollte sie lediglich als rein beispielhaft und die Erfindung nicht einschränkend angesehen werden. Es wird darauf hingewiesen, dass nur die bevorzugten Ausführungsbeispiele dargestellt und beschrieben sind und sämtliche Veränderungen und Modifizierungen, die derzeit und künftig im Schutzumfang der Erfindung liegen, geschützt werden sollen. Anstelle einer Stereokamera 12 mit zwei Einzelbildkameras 16, 18 kann beispielsweise eine Stereokamera mit mehr als zwei Einzelbildkameras verwendet werden.

### Bezugszeichenliste

- 10: Personenkraftwagen
- 12: Stereokamera
- 14: Auswerte- und Steuereinheit
- 16, 18: Einzelbildkamera
- 20, 21: Datenbus
- 22, 24: Sende- und Empfangseinheit
- 26: Frontbereich
- 28: Stereokamera
- P1: Richtungspfeil
- 30, 32: Objektivoptik
- 34, 36: Bildebene
- 38, 40, 38': optische Achse
- S10 bis S74: Verfahrensschritte
- T0 bis T10: Zeitpunkt
- X, Y, Z: Koordinatenachsen Kamerakoordinatensystem

## Patentansprüche

1. Verfahren zum Ermitteln eines Kalibrierparameters für eine Stereokamera,
bei dem die tatsächliche Position eines Objekts zu einem Zeitpunkt bestimmt wird,
die scheinbare Entfernung zwischen Stereokamera (12) und Objekt zu diesem Zeitpunkt mit Hilfe von durch die Stereokamera (12) zu diesem Zeitpunkt erfassten Objektabbildungen des Objekts bestimmt wird,
die tatsächliche Position der Stereokamera (12) zu diesem Zeitpunkt bestimmt wird,
die tatsächliche Entfernung zwischen der Stereokamera (12) und dem Objekt zu diesem Zeitpunkt mit Hilfe der bestimmten tatsächlichen Positionen bestimmt wird,
mindestens ein Kalibrierparameter abhängig von der Abweichung der scheinbaren Entfernung von der tatsächlichen Entfernung ermittelt wird, der zum Bestimmen von weiteren Entfernungen zwischen der Stereokamera (12) und dem Objekt und/oder zwischen der Stereokamera (12) und weiteren Objekten mit Hilfe von durch die Stereokamera (12) erfassten Objektabbildungen dient.

2. Verfahren nach Anspruch 1, **dadurch gekennzeichnet, dass** tatsächliche Position des Objekts zu einer Auswerteeinheit (14) übertragen wird, wobei die Übertragung vorzugsweise mit Hilfe einer dem Objekt zugeordneten Kommunikationseinheit durchgeführt wird.

3. Verfahren nach Anspruch 1 oder 2, **dadurch gekennzeichnet, dass** die tatsächliche Position des Objekts, die tatsächliche Position der Stereokamera (12) und/oder der Zeitpunkt mit Hilfe von Signalen eines satellitengestützten Navigationssystems (GPS) ermittelt wird.

4. Verfahren nach Anspruch 2 oder 3, **dadurch gekennzeichnet, dass** die scheinbare Entfernung zwischen Stereokamera (12) und Objekt zu diesem Zeitpunkt mit Hilfe von durch die Stereokamera (12) zu diesem Zeitpunkt erfassten Objektabbildungen des Objekts, die tatsächliche Entfernung zwischen Stereokamera (12) und Objekt zu diesem Zeitpunkt mit Hilfe der bestimmten tatsächlichen Positionen und/oder der Kalibrierparameter mit Hilfe der Auswerteeinheit (14) bestimmt wird.

5. Vorrichtung zum Ermitteln eines Kalibrierparameters für eine Stereokamera,
bei der eine erste Auswerteeinheit die tatsächliche Position eines Objekts zu einem Zeitpunkt bestimmt,
eine zweite Auswerteeinheit (14) die scheinbare Entfernung zwischen der Stereokamera (12) und dem Objekt zu diesem Zeitpunkt mit Hilfe von durch die Stereokamera (12) zu diesem Zeitpunkt erfassten Objektabbildungen des Objekts bestimmt,
die zweite Auswerteeinheit (14) die tatsächliche Position der Stereokamera (12) zu diesem Zeitpunkt ermittelt,
die zweite Auswerteeinheit (14) die tatsächliche Entfernung zwischen der Stereokamera (12) und dem Objekt zu diesem Zeitpunkt mit Hilfe der bestimmten tatsächlichen Positionen bestimmt,
und bei der die zweite Auswerteeinheit (14) mindestens einen Kalibrierparameter abhängig von der Abweichung der scheinbaren Entfernung von der tatsächlichen Entfernung ermittelt, der zum Bestimmen von weiteren Entfernungen zwischen der Stereokamera (12) und dem Objekt und/oder zwischen der Stereokamera (12) und weiteren Objekten mit Hilfe von durch die Stereokamera (12)erfassten Objektabbildungen dient.

6. Computersoftware, umfassend Befehle und Daten in codierter Form, die nach dem Laden der Computersoftware ein Computersystem veranlassen, die in einem der Ansprüche 1 bis 4 genannten Schritte auszuführen.

7. Datenträger, **dadurch gekennzeichnet, dass** auf diesem Datenträger Daten der Computersoftware nach Anspruch 6 gespeichert sind.
